Europäisches Patentamt

European Patent Office

Office européen des brevets

(11) Numéro de publication : **0 041 879**
**B1**

# (12) FASCICULE DE BREVET EUROPÉEN

(45) Date de publication du fascicule du brevet :
23.05.84

(21) Numéro de dépôt : 81400812.4

(22) Date de dépôt : 22.05.81

(51) Int. Cl.³ : **C 08 F220/06**, C 02 F   5/10 //
(C08F220/06, 228/02)

(54) **Nouvelles compositions polymères acryliques, procédé pour leur obtention, et application comme agents antitartres.**

(30) Priorité : 09.06.80 FR 8012741

(43) Date de publication de la demande :
16.12.81 Bulletin 81/50

(45) Mention de la délivrance du brevet :
23.05.84 Bulletin 84/21

(84) Etats contractants désignés :
**DE NL SE**

(56) Documents cités :
FR-A- 2 157 483
US-A- 3 706 717
CHEMICAL ABSTRACTS, vol. 81, no. 16, 21 octobre
1974, page 106, abrégé 93331u, COLUMBUS; OHIO
(US)
Le dossier contient des Informations techniques présentées postérieurement au dépôt de la demande et
ne figurant pas dans le présent fascicule.

(73) Titulaire : **RHONE-POULENC SPECIALITES CHIMI-
QUES**
**"Les Miroirs" 18, Avenue d'Alsace**
**F-92400 Courbevoie (FR)**

(72) Inventeur : **Boutin, Jean**
**7, rue Buzy**
**F-69780 Mions (FR)**
Inventeur : **Neel, Jean**
**62, rue Lieutenant Colonel Prévost**
**F-69006 Lyon (FR)**

(74) Mandataire : **Tavernier, Colette et al**
**RHONE POULENC RECHERCHES Service Brevets**
**Chimie et Polymères 25, Quai Paul Doumer**
**F-92408 Courbevoie Cedex (FR)**

Jouve, 18, rue St-Denis, 75001 Paris, France

## Description

La présente invention a comme objet des nouvelles compositions polymère acrylique, leur procédé d'obtention et leurs applications, notamment comme agents antitartres.

On sait que la rupture de l'équilibre calcocarbonique des eaux par chauffage ou dégazage ou élévation du pH conduit à des dépôts incrustants de carbonate alcalino-terreux sur les parois des récipients ou des tuyauteries des circuits de réfrigération ou des bouilleurs. La conductibilité thermique de ces dépôts étant incomparablement plus faible que celle des métaux, il y a perte des pouvoirs d'échanges, d'où gaspillage d'énergie. Il faut donc éviter la formation de ces dépôts incrustants appelés communément tartre.

Pour éviter l'entartrage, il existe de nombreux moyens, par exemple :

— élimination partielle ou totale du calcium et du magnésium de l'eau avant usage par échanges d'ions ou décarbonatation à la chaux,

— ou ajout d'un produit acide dans l'eau du circuit,

— ou encore ajout d'agents séquestrant le calcium et le magnésium.

Mais ces procédés sont onéreux et, peuvent également présenter des inconvénients tels que corrosion. Aussi préfère-t-on souvent un procédé plus économique et bien connu qui consiste à rajouter dans l'eau incrustante des produits chimiques hydrosolubles en proportions généralement comprises entre 0,2 et quelques dizaines de mg/l ; ces produits, dénommés plus communément agents antitartre, agissent sur les cristaux en cours de formation. Ils en perturbent la croissance de sorte que la précipitation est retardée et l'incrustation fragilisée si elle se produit.

En d'autres termes, par rajout à l'eau de doses homéopathiques de produits chimiques, on ralentit l'entartrage des échangeurs.

Ces adjuvants sont connus parfois depuis fort longtemps tels les polyphosphates alcalins ; ils présentent l'inconvénient de s'hydrolyser en orthophosphates et alors l'effet antitartre disparaît et l'on a, de plus, des précipitations d'orthophosphates alcalino-terreux, ce qui conduit à l'effet inverse à celui recherché.

On fait également appel à d'autres composés tels que :

— les acides phosphoniques, polyphosphoniques azotés ou non et leurs sels alcalins,

— les homopolymères de bas poids moléculaire de l'acide acrylique ou de l'acide méthacrylique et les sels alcalins correspondants,

— les copolymères de bas poids moléculaire de l'acide acrylique et de l'acide méthacrylique et les sels alcalins correspondants,

— les homopolymères de très bas poids moléculaire de l'acide maléique et ses sels et leurs copolymères.

Cette énumération n'est d'ailleurs pas exhaustive.

On a en particulier constaté que les polymères de diacides éthyléniques tels que l'acide maléique sont de meilleurs inhibiteurs de précipitation des tartres calciques et magnésiens que les homopolymères ou copolymères de monoacides éthyléniques tels que les acides acrylique ou méthacrylique.

Certes, l'effet antitartre des polymères de monoacides éthyléniques est très bon et aussi celui des polyphosphates alcalins. Mais quand la température de l'eau augmente beaucoup et également le temps de séjour de l'eau dans le circuit, les polyphosphates alcalins perdent beaucoup de leur efficacité antitartre et l'on constate que les polymères de monoacides éthyléniques deviennent moins bons antitartres que les polymères de diacides éthyléniques.

Quel que soit le mode opératoire utilisé pour la polymérisation des monoacides éthyléniques, quels que soient les agents de transfert utilisés, quel que soit le catalyseur de formation de radicaux libres utilisé, on obtient des polymères présentant entre eux des propriétés antitartre sensiblement équivalentes mais moins bonnes que celle de l'acide polymaléique à très bas poids moléculaire.

Ainsi, à titre d'exemple, l'effet antitartre des polymères préparés à partir de monoacides éthyléniques est bon aux températures moyennes et jusqu'à 95 °C, mais lorsqu'on atteint l'ébullition de l'eau et même 101,5 °C dans le cas de l'eau de mer, l'effet antitartre est alors moins bon qu'avec l'acide polymaléique.

Ceci est exact, quel que soit le système de polymérisation utilisé : persulfate associé à l'acide acétique, eau oxygénée associée à l'acide acétique ou à l'alcool isopropylique en plus ou moins grandes quantités, eau oxygénée associée au sulfate d'hydroxylamine et à l'alcool isopropylique. Et, dans le cas d'homopolymère d'acide méthacrylique, les viscosités des produits obtenus sont très fortes et totalement inadéquates pour un bon effet antitartre.

Pour prévenir et/ou réduire la formation de dépôts dans des conditions d'acidité élevée, de grande dureté et/ou en présence de sels de zinc, on a proposé l'emploi de copolymères d'un monomère monovinylique et d'un vinyl- ou allylsulfonate ayant 25 à 75 moles-% de sulfonate et un poids moléculaire de 1 000 à 25 000 (brevet US 3,706,717). En dehors de ces limites les copolymères n'auraient pas les propriétés antitartre souhaitées.

On a maintenant trouvé que l'on pouvait obtenir d'excellents résultats avec de nouvelles compositions polymères contenant une quantité réduite d'unités sulfonate.

Plus spécifiquement, les compositions polymères solubles dans l'eau selon l'invention sont caractérisées en ce qu'elles sont obtenues par copolymérisation d'un mélange en parties, exprimées en poids, sensiblement égales d'acide acrylique et d'acide méthacrylique, et de 10 à 20 % en poids de méthallylsulfonate alcalin par rapport à la quantité totale des acides acrylique et méthacrylique.

Une formule simple, mais non limitative de l'invention, dans le cas de l'application antitartre notamment, concerne une composition obtenue à partir d'un mélange comonomère renfermant en poids des quantités sensiblement égales d'acide acrylique et d'acide méthacrylique et de 10 à 18 % en poids de méthallylsulfonate de sodium.

Les compositions selon l'invention peuvent être utilisées comme agents antitartre de toute eau telle que, de nappe, de cours d'eau ou de mer. Généralement une dose de 0,2 à 50 mg/l, et de préférence de 1 à 20 mg/l est adéquate.

Le mode de (co)polymérisation est de tout type radicalaire connu tels que ceux employant par exemple l'eau oxygénée comme catalyseur de formation de radicaux libres, en association avec l'alcool isopropylique en présence de faible quantité de sel de cuivre, ce dernier pouvant être remplacé par une certaine quantité de sulfate d'hydroxylamine ; ou eau oxygénée avec un sel de fer (sulfate ferreux) et sulfate d'hydroxylamine, ou encore persulfate de sodium ou d'ammonium en présence d'acide acétique.

Mais la présente invention sera plus aisément comprise à l'aide des exemples suivants donnés à titre illustratif, mais nullement limitatif.

Toutes les compositions sont polymérisées suivant le même mode opératoire et ne diffèrent que par les proportions de produits chimiques engagés.

Le mode opératoire de préparation de tous les polymères du tableau 1 est le suivant :

— Dans un ballon de 2 l à cols rodés (appelé dans le tableau 1, réacteur 1) et muni d'un agitateur, d'une gaine thermométrique, d'un tube d'introduction d'azote, d'un tube d'introduction de monomère et d'un tube d'introduction de catalyseur, on place sous azote une solution des produits désignés dans les lignes du tableau 1 dites « ballon réacteur 1 ». Ensuite, on chauffe à reflux le milieu désaéré et agité, puis on introduit 10 % des produits désignés dans les lignes du tableau 1 dites « ballon introducteur 2 » et on ajoute 12 % de l'eau oxygénée. On chauffe à nouveau à reflux et sous agitation, puis on introduit en continu et de manière concomitante le reste des comonomères (lignes du tableau 1 dites ballon introducteur 2) et 68 % de l'eau oxygénée. Cette addition des comonomères et du catalyseur dure 1 h 30 min. à reflux. Ensuite, on rajoute 10 % de l'eau oxygénée, on maintient à nouveau 30 min. à reflux et on rajoute les derniers 10 % d'eau oxygénée, puis on maintient 1 h 30 min. à reflux. Ensuite, on amène à une concentration en polymère d'environ 40 à 50 % par distillation sous vide. On refroidit, on mesure l'extrait sec et éventuellement la viscosité du produit.

## Tableau 1

| Exemples | | | | 1 | 2 | 3 | 4 | 5 | 6 | 7 | 8 | 9 |
|---|---|---|---|---|---|---|---|---|---|---|---|---|
| ① Ballon réacteur | Eau déminéralisée | grammes | | 200 | 350 | 350 | 350 | 350 | 350 | 200 | 490 | 225 |
| | Acétate de cuivre | | | 0,5 | 0,5 | 0,5 | 0,5 | 0,5 | 0,5 | 0,5 | 1,3 | 0,5 |
| | Méthallylsulfonate de sodium | | | 20 | 10 | 5 | 8 | 8 | 5 | 25 | 0 | 0 |
| | Isopropanol | | | 50 | 50 | 50 | 50 | 100 | 50 | 0 | 100 | 0 |
| | Acide acétique | | | 0 | 0 | 0 | 0 | 0 | 0 | 100 | 0 | 100 |
| ② Ballon introducteur | Eau déminéralisée | produit chimique | | 450 | 450 | 450 | 450 | 450 | 450 | 450 | 160 | 500 |
| | Acides acryliques | | | 230 | 230 | 230 | 230 | 230 | 0 | 460 | 230 | 460 |
| | Acide méthacrylique | | | 230 | 230 | 230 | 230 | 230 | 460 | 0 | 230 | 0 |
| | Méthallylsulfonate de sodium | | | 30 | 40 | 50 | 72 | 50 | 50 | 50 | 0 | 0 |
| | Acétate de cuivre | | | — | — | — | — | — | — | — | 0,9 | — |
| $\left(\dfrac{\text{Méthallylsulfonate/Acides}}{\text{acrylique + méthacrylique}} \times 100\right)$ % | | | | 10,87 | 10,87 | 11,95 | 17,4 | 12,6 | 11,95 | 16,3 | — | — |
| ③ Ballon Introducteur gradué | Eau oxygénée à 110 volumes (nombre ml) | | | 100 | 100 | 100 | 100 | 100 | 100 | 100 | 100 | 100 |
| Extrait sec à 105 °C en % du polymère final après concentration | | | | 48 | 50 | 51 | 50 | 50 | 40 | 51 | 44 | 51 |
| Viscosité Brookfield — 10 T/min mPa.s (centipoises) du polymère après concentration — aiguille n° 1 | | | | 270 | 270 | 1 000 | 320 | 240 | 1 500 | 120 | — | 150 |

# 0 041 879

Effets antitartre obtenus

L'effet antitartre peut être vérifié par l'un des deux tests ci-après.

Test de précipitation du carbonate de calcium par ébullition d'une eau entartrante :

Mode opératoire :

L'eau utilisée est une eau de nappe. Elle a les caractéristiques suivantes au départ :

| | |
|---|---|
| — pH | 7,3 |
| — Dureté totale (TH) | 33 degrés français (°F) |
| — Dureté temporaire | 21 degrés français (°F) |
| — Dureté permanente | 12 degrés français (°F) |
| — Titre alcalimétrique complet (TAC) | 25 degrés français (°F) |
| — Résistivité | 1 800 ohm · cm. |

Dans un erlen rodé en verre de 500 ml, on introduit 150 ml d'eau non traitée ou traitée avec les polymères cités dans le tableau 1 à une dose de 6 mg/l ; on ajoute trois petits éclats de porcelaine lavés. On porte à l'ébullition à reflux par l'intermédiaire d'un bain de sable. Quand l'ébullition apparaît, on la maintient alors pendant exactement dix minutes. Ensuite, on refroidit l'erlen contenant l'eau sous un courant d'eau froide, puis on filtre l'eau sur filtre Sartorius 0,45 $\mu$m et on dose la dureté résiduelle totale de l'eau que l'on appelle communément dureté permanente quand l'eau ne contient pas d'inhibiteur d'entartrage.

Plus la dureté finale (TH) de l'eau est proche de sa dureté totale initiale, meilleur est l'inhibiteur vis-à-vis de la précipitation du carbonate de calcium.

On a déterminé un temps d'ébullition de 10 min.

Résultats obtenus :

Ils sont récapitulés dans le tableau 2.

Tableau 2

| Inhibiteur (6 mg/1) | Dureté finale de l'eau (°F) |
|---|---|
| Témoin sans traitement inhibiteur | 12,0 |
| Produit 1 du tableau 1 | 25,2 |
| Produit 2 du tableau 1 | 26,7 |
| Produit 3 du tableau 1 | 27 |
| Produit 4 du tableau 1 | 26,2 |
| Produit 5 du tableau 1 | 25,9 |
| Acide polymaléique de très bas poids moléculaire | 27,2 |
| Produit 6 du tableau 1 | 22,0 |
| Produit 7 du tableau 1 | 20,5 |
| Produit 8 du tableau 1 | 24,0 |
| Produit 9 du tableau 1 | 20,5 |
| Acide polyacrylique de bas poids moléculaire | 20,0 |
| Méthallylsulfonate de sodium monomère | 12,0 |

L'amélioration de l'effet antitartre obtenu par utilisation des produits 1, 2, 3, 4, 5 est significative, en particulier pour la formule 3 par rapport à l'utilisation d'acide polyacrylique de bas poids moléculaire (produit 9) et aussi par rapport à l'utilisation de copolymère acide acrylique, acide méthacrylique, mais sans méthallylsulfonate de sodium (produit 8).

Test d'entartrage par ébullition d'eau de mer :

Les usines de dessalement d'eau de mer opèrent la plupart du temps par distillation pour séparer

4

## 0 041 879

l'eau pure des sels saumâtres. Sans traitement inhibiteur, on a alors un entartrage correspondant à la précipitation de carbonate de calcium et de carbonate plus ou moins complexe de magnésie ou de magnésie même. Le bon fonctionnement des unités de dessalement d'eau de mer dépend donc en grande partie des possibilités d'inhibition de l'entartrage des produits antitartre ajoutés.

Mode opératoire :

On prépare, au laboratoire, une eau de mer synthétique correspondant à la formule de BRUJEWICZ à partir d'eau distillée et de selon le livre de l'eau, 2e édition, volume 2, page 249, CEBEDOC S.P.R.L. H. GOLDSTEIN, 63, rue Hayeneux (HERSTAL LEZ LIEGE) :

| | |
|---|---|
| NaCl | 26,518 g/kg |
| $MgCl_2$ | 2,447 g/kg |
| $MgSO_4$ | 3,305 g/kg |
| $CaCl_2$ | 1,141 g/kg |
| KCl | 0,725 g/kg |
| $NaHCO_3$ | 0,202 g/kg |
| NaBr | 0,083 g/kg |

Dans un erlen rodé en verre de 500 ml, on introduit 300 ml d'eau de mer synthétique non traitée (essai témoin) ou traitée avec 2 mg/l d'inhibiteur d'entartrage ; on ajoute 8 petits éclats de porcelaine lavés. L'erlen est placé dans un bain-marie régulé à 140 °C pour accélérer le démarrage de l'ébullition. On porte l'eau de mer à l'ébullition à reflux, soit environ 101,5 °C. Quand l'ébullition apparaît, on la maintient alors pendant exactement 40 minutes. Ensuite, on refroidit l'erlen pendant 20 minutes avec un courant d'eau froide. On filtre l'eau de mer sous vide trompe à eau et sur filtre Sartorius 0,45 μm.

Sur le filtre, on récupère le tartre en suspension, c'est-à-dire non adhérant à la paroi ; on le rince avec 3 fois 10 ml d'eau bidistillée qui a servi préalablement à rincer les parois de l'erlen pour éliminer les traces d'eau de mer accrochées à la paroi. Après séchage du filtre, on dissout à l'ébullition le calcium et le magnésium déposés sur le filtre dans de l'acide chlorhydrique suprapur 3 N, puis on dose le calcium et le magnésium correspondant donc au dépôt non adhérant.

Parallèlement, pour mesurer le calcium et le magnésium adhérant à la paroi de l'erlen (tartre incrustant), on le dissout de la même manière dans l'acide chlorhydrique et l'on dose le calcium et le magnésium.

Les résultats sont exprimés en mg de calcium et mg de magnésium totaux, c'est-à-dire, en la somme du calcium et magnésium en suspension et adhérents à la paroi.

On a pris des conditions d'entartrage très sévères pour mieux différencier les produits et une dose d'inhibiteur de 2 mg/l.

Les résultats obtenus sont récapitulés dans le tableau 3.

Tableau 3

| | Dépôt total mg Ca + mg Mg |
|---|---|
| Témoin sans inhibiteur | 22,7 |
| Acide acrylique de bas poids moléculaire | 18,0 |
| Acide polymaléique de bas poids moléculaire | 8,0 |
| Produit 3 du tableau 1 | 9 |

On remarque donc, une amélioration significative due au produit selon l'invention.

**Revendications**

1. Compositions polymères solubles dans l'eau caractérisées en ce qu'elles sont obtenues par copolymérisation d'un mélange d'acide acrylique et d'acide méthacrylique en parties, exprimées en poids, sensiblement égales, et de 10 à 20 % en poids de méthallylsulfonate alcalin par rapport à la quantité totale des acides acrylique et méthacrylique.

2. Compositions polymères selon la revendication 1, caractérisées en ce qu'elles sont obtenues par copolymérisation d'un mélange en parties sensiblement égales d'acide acrylique et méthacrylique et de 10 à 18 % de méthallylsulfonate de sodium par rapport à la quantité des acides acrylique et méthacrylique.

3. Utilisation des compositions selon l'une des revendications 1 ou 2 comme agent d'inhibition de l'entartrage des eaux.

## Claims

1. Water-soluble polymer compositions, characterised in that they are obtained by the copolymerisation of a mixture of acrylic acid and methacrylic acid in substantially equal parts, expressed by weight, and of 10 to 20 % by weight of an alkali metal methallylsulphonate, relative to the total amount of the acrylic and methacrylic acids.

2. Polymer compositions according to Claim 1, characterised in that they are obtained by the copolymerisation of a mixture of substantially equal parts of acrylic and methacrylic acids and of 10 to 18 % of sodium methallylsulphonate, relative to the amount of acrylic and methacrylic acids.

3. Use of the compositions according to one of Claims 1 and 2 as scaling inhibitors in water.

## Ansprüche

1. Wasserlösliche Polymermassen, dadurch gekennzeichnet, daß sie durch Copolymerisation eines Gemisches aus Acrylsäure und Methacrylsäure in im wesentlichen gleichen Gew.-Teilen und auf 10 bis 20 Gew.-% Alkali-methallylsulfonat, bezogen auf die Gesamtmenge der Acrylsäure und Methacrylsäure, erhalten worden sind.

2. Polymermassen nach Anspruch 1, dadurch gekennzeichnet, daß sie durch Copolymerisation eines Gemisches aus praktisch gleichen Teilen Acrylsäure und Methacrylsäure und aus 10 bis 18 % Natrium-methallylsulfonat, bezogen auf die Menge der Acrylsäure + Methacrylsäure, erhalten worden sind.

3. Verwendung der Massen nach einem der Ansprüche 1 oder 2, als Mittel zur Verhinderung der Kesselsteinbildung in Wasser.